# EUROPEAN PATENT APPLICATION

(11) **EP 2 328 051 A1**
(43) Date of publication of application: **01.06.2011**
(21) Application number: 09177318.4
(22) Date of filing: 27.11.2009
(51) Int. Cl.: G05B 19/409

(54) **Human machine interface device, and system and method incorporating the same**

(71) Applicant: Siemens Aktiengesellschaft, 80333 München (DE)
(72) Inventor: Kumar, Mahendra, 560010, Bangalore (IN)

(57) **Abstract**

In accordance with the present invention, an automation system (1) comprising a plurality of human machine interface devices (2A-2I) connected to a network (4), includes at least a first human machine interface device (2B) having a messaging module triggerable directly or indirectly by an operator (8) proximate to said first human machine interface device (2B). Upon being triggered, the messaging module routes an alarm event generated by a second human machine interface device (2D) connected to the network (4) to said first human machine interface device (2B). The messaging module then generates a notification (10) including a device identifier (11, 12) of said second human machine interface device (2D) that generated the alarm event. Furthermore, the messaging module remotely accesses said second human machine interface device (2D) from the first human machine interface device (2B) to acknowledge said alarm event, responsively to an operator input that is received by the first human machine interface device (2B) in response to said notification (10).

## Description

The present invention relates to automation systems having multiple human machine interface (HMI) devices connected to a network. In particular, embodiments of the present invention relate to a technique for monitoring and handling of alarm events generated by one or more HMI devices connected to the network.

Industrial automation systems, and in particular, distributed automation systems, have special devices which form the interface between an operator and the automation system. Such devices are generally referred to as human machine interface (HMI) devices. Furthermore, it has become typical to refer to this device class as devices for "operator control and monitoring" of technical facilities. The concept of an HMI device is to be understood as a generic concept and includes all of the components associated with this device group, e.g., operator panels.

In a process or discrete industry having a distributed automation system, HMI devices, typically comprising operator panels, are placed in different locations in a plant. Generally, these HMI devices are accessible by an operator, often a single operator on the field, or from a centralized control centre. In the current scenario, when an alarm is generated by an HMI device, an operator has to physically go to the HMI device that generated an alarm, to acknowledge the alarm. Hence, the operator is able to attend only one HMI device at a time for handling an alarm generated by that panel. Thus, in the case when alarms are generated by multiple HMI devices in the field, a single operator would not be able to attend to the alarms at same time but would have to physically go to each device one by one to acknowledge the alarm(s) generated by that device.

The above process is not only time consuming but is further disadvantageous in that the operator is often not be able to attend to an HMI device that generated a critical alarm, within a short time. Furthermore, in the current scenario, the operator is not able to control or monitor the alarms from multiple HMI devices form one place, other than from the centralized control room. Using a thin client operator panel, it may be possible for an operator to remotely login to another HMI device for acknowledging or closing an alarm. However, this requires the operator to manually know which device is generating alarm, only after which the operator is able to login to that particular device to acknowledge the alarm.

Accordingly, the object of the present invention is to provide a quick and improved means for handling an alarm event generated by one or more HMI devices connected to a network.

The above object is achieved by a system according to claim 1, a method according to claim 11, and an associated computer program product according to claim 16.

The underlying idea of the present invention is to provide an automated technique allowing an operator to acknowledge an alarm event generated by an HMI device from any where in the field using any HMI device connected to the network. This is achieved by using at least a first HMI device in an automation system that includes a messaging module triggerable actively or passively by an operator proximate to the first HMI device. Upon being triggered, the messaging module sets the first HMI device as an active monitoring (master) device, to which an alarm event generated by any second HMI device connected to the network can be routed. Further, using the messaging module, the operator is able to access the second HMI device to acknowledge an alarm generated by the second HMI device.

In a preferred embodiment, the messaging module is triggerable to route alarm events generated by multiple of said human machine devices connected to said network, wherein the notification generated by said messaging module includes a display of a list of device identifiers of said multiple human machine interface devices, wherein the messaging module is further adapted to receive an operator input selecting a human machine interface device from said displayed list and to remotely access the selected human machine interface device to acknowledge the alarm event generated by the selected human machine interface device. The operator is thus able to monitor and handle alarm events generated by multiple HMI devices located in various parts of the plant from the first HMI device, which functions as an active monitoring HMI device when the messaging module is triggered.

In one embodiment, the device identifier in said notification includes at least one of a device name and a device address.

In a further embodiment, said notification further includes an indication for a severity of a generated alarm event. This allows the operator to prioritize the order of attending the alarm events based on the severity of the respective alarm events.

In an exemplary embodiment, said messaging module is a software application installed or embedded on to said first human machine interface device. Messaging software obviates the need for a thin client HMI panel for logging on to other HMI devices.

In one embodiment, said first human machine interface device further includes a proximity sensor adapted to detect the presence of an operator proximate to the first human machine interface device, wherein the messaging module is triggered in response to said detection. Advantageously, in this embodiment, whenever an operator is proximate to an HMI device, the messaging module in that device is triggered, whereby, the same device functions as an active monitoring HMI device and alerts the operator about alarm events generated by one or more HMI devices connected to the network.

Several advantageous technical features may further be incorporated that make use of the proximity sensor. Accordingly, in an exemplary further embodiment, the system comprises means for auto-locking a panel screen of said first human machine interface device when no operator is detected by said proximity sensor. This increases the service life of the device. In another exemplary embodiment, in order to reduce power consumption, the system further comprises means for switching off a panel backlight of said first human machine interface device when no operator is detected by said proximity sensor. This is particularly advantageous when the device is running on a UPS (uninterrupted power supply) back-up.

In a preferred embodiment, each of said plurality of human machine interface devices includes a messaging module as described above. Advantageously, any of these devices can be thus triggered to function as an active monitoring HMI device, allowing the operator to attend or monitor alarm events generated by one or more these HMI from any location in the plant.

The present invention is further described hereinafter with reference to illustrated embodiments shown in the accompanying drawings, in which:
FIG 1 is a block diagram of a portion of an automation system,
FIG 2 is a schematic drawing showing an HMI panel including a message window generated by the messaging module in accordance with one embodiment of the present invention, and
FIG 3 is a flowchart illustrating an exemplary method of handling an alarm event generated by an HMI device in a network, in accordance with the present invention.

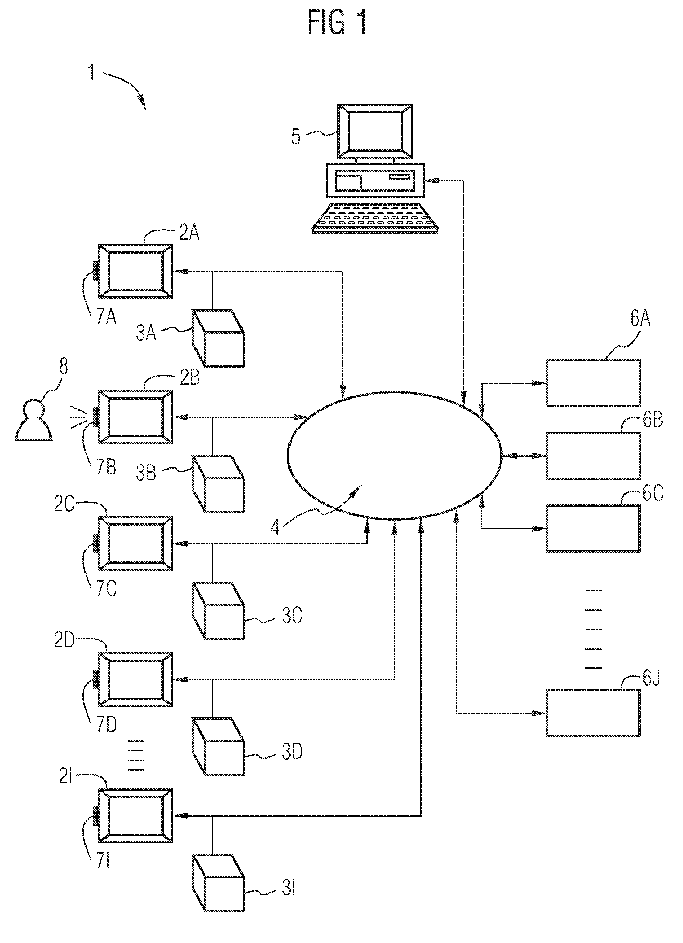

Referring FIG 1 is illustrated an embodiment of an automation system 1 according to the present invention. The system 1 includes a plurality of HMI devices 2A-2I exchanging data with a plurality of field devices 6A-6J over a network 4. Each HMI device 2A-2I comprises an operator panel which has at least one display unit, e.g., an LCD display or a touch screen, and at least one input unit, e.g., a membrane keyboard, keypad, mouse pad, etc. Furthermore, each HMI device 2A-2I generally has a processing unit on which an HMI control program is executed. The HMI control program is configured for performing user-specific preprocessing and post-processing, particularly of operating actions, measured values, events and alarms from one or more of the field devices 6A-6J, and for driving the display unit and input unit of the respective HMI device. Thus, for example, operating actions, measured values, events and alarms from one or more of the field devices 6A-6J may be entered by HMI control program into an interactive process image and displayed by operator panel of each HMI device 2A-2I. Each of the HMI devices 2A-2I is further connected to an associated programmable logic controller (PLC) 3A-3I respectively for controlling one or more of the field devices 6A-6J. Field devices are understood as peripheral devices such as input/output assemblies, drives, actuators, sensors, and regulator or control units of all types operating in a technical facility. The network 4 on which the HMI devices 2A-2I and the field devices 6A-6J communicate may take the form of an Ethernet using standard TCP/IP protocols, or it may be a proprietary network, such as Profibus™, FireWire, or even internal PC bus systems (PCI).

The HMI devices 2A-2I may be located in various parts of the field/plant and each HMI device 2A-2I may be monitored or controlled by an operator at the location of the respective HMI device, or from a centralized control unit 5, typically including a PC, communicating with the field devices 6A-6J and the HMI devices 2A-2I over the network 4. Embodiments of the present invention described herein below would allow an operator to control and monitor events, particularly alarm events, generated by one or more HMI devices connected to the network 4 from any HMI device at any location in the plant. This is particularly advantageous in case of such HMI devices installed in a distributed environment, which are operated by a single operator or limited operators.

In accordance with the present invention, one more of the HMI devices 2A-2I are each provided with a messaging module. The messaging module may include appropriate hardware or software or combinations thereof. In the illustrated embodiment, the messaging module includes a software application installed or embedded into the respective HMI device. The messaging software generally runs in the background and is triggered actively or passively by an operator in the proximity of the device. For example, the messaging software may be triggered when the operator touches the panel. In the preferred embodiment illustrated herein, the messaging software is triggered when an operator is detected proximate to the HMI device, for example, by a proximity sensor embedded on to the HMI device. Thus in the above-mentioned examples, the trigger is generated passively by the operator in the proximity of the HMI device, i.e., within a predefined distance from the HMI device. The messaging software can be alternately triggered by an active input from the operator, for example, via a keyboard or mouse or touch-screen. Upon being triggered, the messaging software sets that HMI device as an active monitoring (master) device, to which an alarm event generated by any other of the HMI devices 2A-2I can be routed. As used herein, an alarm event, or simply "alarm", refers to an event generated by an HMI device in response to a fault event occurring in any of the field devices connected to the HMI device.

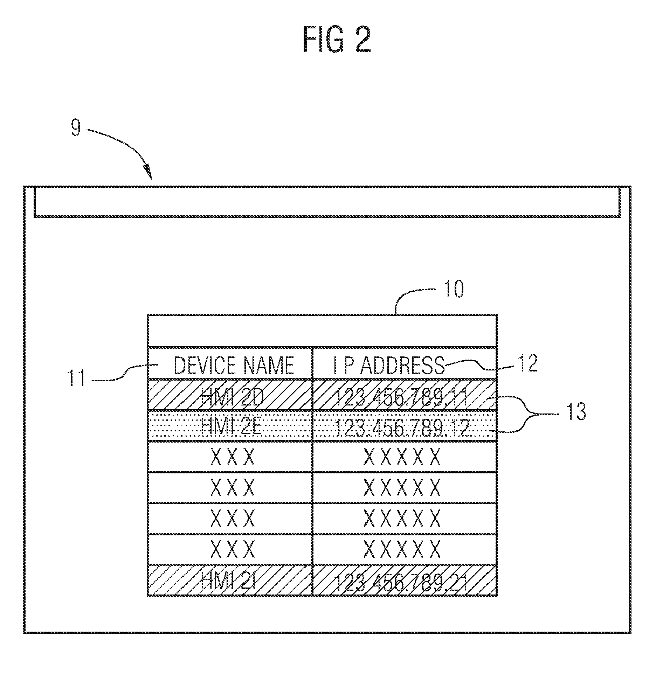

In the embodiment illustrated herein, all the HMI devices 2A-21 have a messaging software installed therein, and further have a proximity sensor 7A-7I embedded thereon that detect the presence of an operator 8 when the operator 8 is proximate to any of these HMI devices 2A-2I. Let us consider an example when the operator 8 proximate to the HMI device 2B, at a time when alarm events are generated by the HMI devices 2D-2I connected to the network 4. In such a case, the presence of the operator 8 is detected by the proximity sensor 7B embedded onto the HMI device 2B, which triggers the messaging software running in the background to route the alarm events generated by the HMI devices 2D-2I to the HMI device 2B, which now functions as an active monitoring device. The messaging software generates a notification of the device identifiers of the HMI devices 2D-2I that generated the alarm events. The notification is typically a visual message, but may be an audio message. FIG 2 shows an exemplary HMI panel screen 9 containing a notification generated by the messaging software, which includes a window 10 displaying a list of device identifiers, including, for example, the device name 11 and the device address 12, including for example an IP address, of all HMI devices 2D-2I that generated an alarm. Additionally, the notification window 10 may also include an indication 13 of the severity or criticality of the alarm generated by each of the HMI devices 2D-2I. The indication 13 may include a visual indication such as a color code as shown in FIG 2, or a numeric indication, among many other examples. The severity indication 13 in the notification window allows the operator 8 to attend to the most critical alarms, such as traps, at the earliest. Referring back to FIG 1, the operator 8 accordingly selects an HMI device 2D from the list by providing a first input the HMI device 2B. The messaging software then remotely accesses the selected HMI device 2D by remotely logging on to the HMI device 2D. A screen of the remote HMI device 2D may then be displayed on the panel of the HMI device 2B displaying the alarm generated by the HMI device 2D. The operator 8 accordingly acknowledges the alarm event by providing a second input to the HMI device 2B. The remotely accessed screen may be further advantageously be configured for displaying other events generated by the HMI device 2D, which may accordingly be monitored by the operator 8 from the HMI device 2B.

Other notified alarms that are routed to the HMI device 2B may thus be handled in the same way, the order being determined, for example, by the severity of the alarm.

Thus advantageously, by installing the messaging software and the proximity sensor 7A-I into each of the HMI devices 2A-2I connected to the network, the operator 8 can be alerted from any location about an alarm generated by one or more of the HMI devices 2A-2I. The HMI device, to which the operator 8 is proximate, is accordingly triggered to function as an active monitoring device, through which, the alarms generated from any of the HMI devices connected to the network 4 can be acknowledged. The proximity sensors 7A-I may also facilitate several other advantageous features. For example, the panel screen of an HMI device may be auto-locked when no operator is detected by the proximity sensor. This increases the service life of the device. Further, in order to reduce power consumption, the panel backlight the HMI device may be automatically switched off when no operator is detected by the proximity sensor. This is particularly advantageous when the device is running on a UPS (uninterrupted power supply) back-up.

It should be appreciated that although the above-described embodiments refer to an industrial automation system, embodiments of the present invention may be also be used in other types of automation systems, such as building automation systems, that include multiple HMI devices in a distributed environment

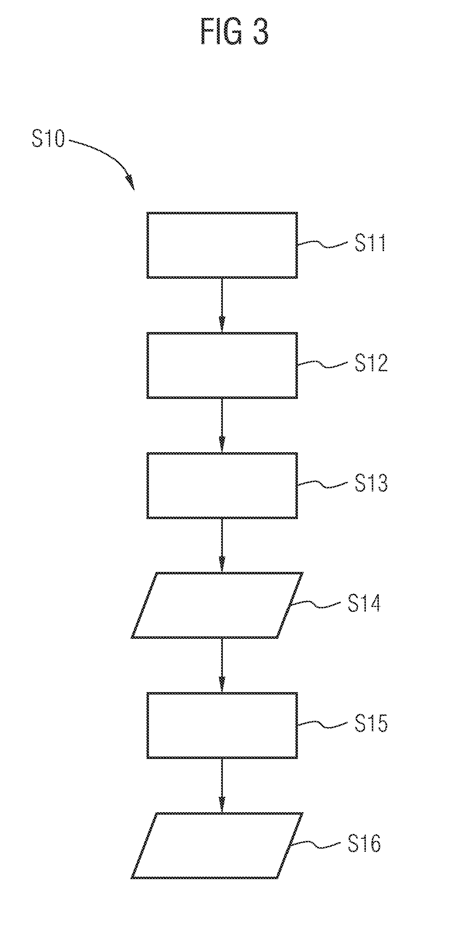

FIG 3 is a flowchart illustrating an exemplary method S10 for handling an alarm event in accordance with one embodiment of the present invention. The method S10 begins at block S11, by receiving a trigger actively or passively from an operator proximate to a first HMI device, as described earlier. Next, block S12 involves routing alarm events generated by one or more HMI devices connected to the first HMI device over a network to the first HMI device. The above-mentioned one or more HMI devices include at least a second HMI device different from the first HMI device. At block S13, the method involves generating a notification including the device identifiers of all the HMI devices that generated an alarm. Typically, the notification includes a displayed list of device identifiers that includes at least a device name or a device address of those HMI devices that generated an alarm. The notification generated may also include an indication of the severity of the generated alarms. Block S14 involves receiving a first operator input selecting an HMI device from the displayed list. Subsequently, block S15 involves remotely accessing the selected HMI device by remotely logging on to the selected HMI device. Finally, block S16 involves receiving a second operator input in response to which the alarm event generated by the selected HMI device is acknowledged.

The above-described method S10 may be embodied, for example, in a computer program product. The computer program product according to the present invention is a commercial manifestation of the computer program which has software means for performing the method S10 when the computer program is executed in an HMI device or an automation system. These may be recordings on typical data carriers such as diskettes, CDs, DVDs, hard drives, memory sticks, tapes, etc. However, files which may be stored in a computer server, downloaded with the aid of the Internet, for example, and then loaded into an HMI device and/or an automation system also represent a computer program product according to the present invention.

Summarizing, in accordance with the present invention, an automation system comprising a plurality of human machine interface devices connected to a network, includes at least a first human machine interface device having a messaging module triggerable directly or indirectly by an operator proximate to said first human machine interface device. Upon being triggered, the messaging module routes an alarm generated by a second human machine interface device connected to the network to said first human machine interface device. The messaging module then generates a notification including a device identifier of said second human machine interface device that generated the alarm. Furthermore, the messaging module remotely accesses said second human machine interface device from the first human machine interface device to acknowledge said alarm, responsively to an operator input that is received by the first human machine interface device in response to said notification.

Although the invention has been described with reference to specific embodiments, this description is not meant to be construed in a limiting sense. Various modifications of the disclosed embodiments, as well as alternate embodiments of the invention, will become apparent to persons skilled in the art upon reference to the description of the invention. It is therefore contemplated that such modifications can be made without departing from the spirit or scope of the present invention as defined by the below-mentioned patent claims.

## Claims

1. An automation system (1) comprising a plurality of human machine interface devices (2A-2I) connected to a network, at least a first human machine interface device (2B) of said system (1) comprising:
- a messaging module triggerable actively or passively by an operator (8) proximate to said first human machine interface device (2B) ,
wherein upon being triggered, said messaging module routes an alarm event generated by a second human machine interface device (2D) connected to the network (4) to said first human machine interface device (2B), generates a notification (10) including a device identifier (11, 12) of said second human machine interface device (2D) that generated the alarm event, and remotely accesses said second human machine interface device (2D) to acknowledge said alarm event responsively to an operator input that is received by the first human machine interface device (2B) in response to said notification (10).

2. The system (1) according to claim 1, wherein, upon being triggered, the messaging module routes alarm events generated by multiple of said human machine devices (2D-2I) connected to said network (4), wherein the notification (10) generated by said messaging module includes a display of a list of device identifiers (11, 12) of said multiple human machine interface devices (2D-2I), wherein the messaging module is further adapted to receive an operator input selecting a human machine interface device (2D) from said displayed list and to remotely access the selected human machine interface device (2D) to acknowledge the alarm event generated by the selected human machine interface device (2D).

3. The system (1) according to any of the preceding claims, wherein the device identifier in said notification (10) includes at least one of a device name (11) and a device address (12).

4. The system (1) according to any of the preceding claims, wherein said notification (10) further includes an indication (13) for a severity of a generated alarm event.

5. The system (1) according to any of the preceding claims, wherein said messaging module is a software application installed or embedded on to said first human machine interface device (2B).

6. The system (1) according to any of the preceding claims, wherein said first human machine interface device (2B) further includes a proximity sensor (7B) adapted to detect the presence of the operator (8) proximate to the first human machine interface device (2B), wherein the messaging module is triggered in response to said detection of the operator (8) .

7. The system (1) according to claim 6, further comprising means for auto-locking a panel screen of said first human machine interface device (2B) when no operator is detected by said proximity sensor (7B).

8. The system (1) according any of claims 6 and 7, further comprising means for switching off a panel backlight of said first human machine interface device (2B) when no operator is detected by said proximity sensor (7B).

9. The system (1) according to any of the preceding claims, wherein each of said plurality of human machine interface devices (2A-2I) includes a messaging module in accordance with any of the preceding claims.

10. A human machine interface device (2B), said human machine interface device being a first human machine interface device (2B) of a plurality of human machine interface devices (2A-2I) connected to a network (4), said first human machine interface device (2B) comprising:
- a messaging module triggerable actively or passively by an operator (8) proximate to said first human machine interface device (2B) ,
wherein upon being triggered, the messaging module routes an alarm event generated by a second human machine interface device (2D) connected to the network (4) to said first human machine interface device (2B), generates a notification (10) including a device identifier (11, 12) of said second human machine interface device (2D) that generated the alarm event, and remotely accesses said second human machine interface device (2D) to acknowledge said alarm event responsively to an operator input that is received by the first human machine interface device (2B) in response to said notification (10).

11. In an automation system (1) comprising a plurality of human machine interface devices (2A-2I) connected to a network (4), a method (S10) comprising:
- in response to receiving (S11) a trigger, routing (S12) an alarm event to a first human machine interface device (2B), said alarm event being generated by a second human machine interface device (2D) connected to the network (4),
- generating (S13) a notification (10) including a device identifier (11, 12) of said second human machine interface device (2D) that generated the alarm event,
- remotely accessing (S15) said second human machine interface device (2D) from said first human machine interface device (2B) to acknowledge said alarm event, responsively to receiving (S16) an operator input in response to said notification (10).

12. The method according to claim 11, comprising:
- responsively to said trigger, routing (S12) alarm events generated by multiple of said human machine devices (2D-2I) connected to said network (4),
- generating (S13) said notification (10) that includes a display of a list of device identifiers (11, 12) of said multiple human machine interface devices (2D-2I),
- receiving (S14) an operator input selecting a human machine interface device (2D) from said displayed list, and
- remotely accessing (S15) the selected human machine interface device (2D) to acknowledge the alarm event generated by the selected human machine interface device (2D) .

13. The method according to any of claims 11 and 12, wherein the device identifier in said notification (10) includes at least one of a device name (11) and a device address (12).

14. The method according to any of claims 11 to 13, wherein said notification (10) further includes an indication (13) for a severity of a generated alarm event.

15. The method according to any of claims 11 to 14, wherein said trigger is received (S11) upon detection of an operator (8) proximate to the first human machine interface device (2B) .

16. A computer program product having a computer program, which is executed in a human machine interface device (2A-2I) in an automation system (1), and which has software for performing a method according to any of claims 11 to 15.
